# EUROPÄISCHE PATENTANMELDUNG

(11) **EP 4 554 086 A1**
(43) Veröffentlichungstag der Anmeldung: **14.05.2025**
(21) Anmeldenummer: 24211143.3
(22) Anmeldetag: 06.11.2024
(51) Int. Cl.: H02S 20/23

(54) **VERFAHREN ZUM VERBAUEN VON SOLARPANELS BEI EINEM GEBÄUDETEIL INSBESONDERE AUF EINEM DACH, SOWIE EINE SOLARVERBAUUNG**

(30) Priorität: 07.11.2023 CH 12282023
(71) Anmelder: Norline AG, 8152 Opfikon (CH)
(72) Erfinder: ACKLIN, Hanspeter, 6340 Baar (CH)
(74) Vertreter: Luchs, Willi

(57) **Zusammenfassung**

Bei einem Verfahren zum Verbauen von Solarpanels bei einem Gebäudeteil insbesondere auf einem Dach (15) werden eine Anzahl von Solarpanels (11) auf einer Auflagefläche (16, 17) des Gebäudeteils installiert, wobei die Solarpanels (11) durch ein Halte- und Stützsystem (20) in einer vorgegebenen Position auf dieser Auflagefläche (16, 17) gelegt und/oder befestigt werden. Die mehreren Solarpanels (11) und das diese tragende Halte- und Stützsystem (20) werden zumindest an einem separaten Montageplatz derart zusammengebaut, wie sie im geplanten montierten Endzustand auf dem Gebäudeteil verbaut werden. Anschliessend werden sie transportiert, durch ein Hebeorgan im zusammengebauten Zustand auf den Gebäudeteil gehoben und auf die Auflagefläche (16, 17) an die vorgegebene Position gelegt, und die elektrischen Verbindungen der Solarpanels (11) mit mindestens einem elektrischen Netz im oder am Gebäude hergestellt. Die Halte- und Stützsysteme mit den Solarpanels können am separaten Montageplatz sehr rationell und sogar automatisiert zusammengebaut werden.

## Beschreibung

Die Erfindung betrifft ein Verfahren zum Verbauen von Solarpanels bei einem Gebäudeteil insbesondere auf einem Dach, bei dem eine Anzahl von Solarpanels auf einer Auflagefläche des Gebäudeteils installiert werden, wobei die Solarpanels durch ein Halte- und Stützsystem in einer vorgegebenen Position auf dieser Auflagefläche gelegt und/oder befestigt werden, wobei die Solarpanels durch einen Transport zum Gebäude geführt und auf den Gebäudeteil gehoben und die elektrischen Verbindungen der Solarpanels mit mindestens einem elektrischen Netz im oder am Gebäude hergestellt werden, sowie eine Solarverbauung, dies nach dem Oberbegriff des Anspruchs 1 bzw. des Anspruchs 7.

Solche Solarpanels werden immer öfter insbesondere auf Dächern montiert, welche die Sonnenenergie nutzen und als Photovoltaikmodule zur Erzeugung von Strom ausgebildet sind. Die Solarpanels werden dabei durch eine Unterkonstruktion in einer vorgegebenen Position auf das Dach befestigt. Hierbei werden sie üblicherweise unter einem Neigungswinkel aufgestellt und sind in der Regel in West- und in Ostrichtung ausgerichtet, so dass bei den einen vom Morgen bis am Mittag ostwärts und bei den andern nach Mittag bis Abend westwärts eine direkte Sonneneinstrahlung bei Sonnenschein erfolgt.

Insbesondere wenn diese Solarpanels auf Flachdächern mit keinem oder nur einen geringen Neigungswinkel gegenüber der Horizontalen installiert werden, erfolgt die Montage der Module jeweils auf so einer Unterkonstruktion, welche zum einen für das Aufstellen der Solarpanels unter dem gewünschten Neigungswinkel und zum anderen für das sichere Halten an ihrem Platz dient. Mit der Unterkonstruktion muss gewährleistet sein, dass die Solarpanels auch bei starker Windbelastung sicher und stabil auf dem Dach gehalten sind und ein Kippen oder gar ein Abheben der Module durch Windböen ausgeschlossen ist.

Solche Unterkonstruktionen werden auf dem Dach zusammenmontiert, was zeitaufwändig und arbeitsintensiv ist, nebstdem, dass es zu hohen Montagekosten führen kann. Zudem sind spezielle Sicherungsanforderungen für das Montagepersonal zu gewährleisten, was aber hindernd beim Arbeiten ist und gewisse Risiken nicht ausschliesst.

Die herkömmliche Befestigung der Unterkonstruktion auf dem Dach erfolgt oftmals durch eine mechanische Verbindung, wie z. B. eine Verschraubung. Hierbei besteht die Gefahr, dass es zu Undichtigkeiten in der Dachkonstruktion und sogar zu Lecks im Dach führen könnte.

Der Erfindung liegt die Aufgabe zugrunde, ein Verfahren zum Verbauen von Solarpanels bei einem Gebäudeteil insbesondere auf einem Dach zu schaffen, bei dem die Verbauung kostengünstiger und montagefreundlicher ausgeführt kann und dabei auch die Funktionstüchtigkeit gewährleistet sowie die Halte- und Stabilitätsanforderungen im verbauten Zustand der Solarpanels dauerhaft sichergestellt werden.

Diese Aufgabe ist erfindungsgemäss durch die Merkmale des Anspruchs 1 bzw. des Anspruchs 7 gelöst.

Erfindungsgemäss werden die mehreren Solarpanels und das diese tragende Halte- und Stützsystem zumindest an einem separaten Montageplatz komplett zusammengebaut, wie sie im geplanten montierten Endzustand bei oder auf dem Gebäudeteil positioniert werden, und dass sie anschliessend transportiert, durch ein Hebeorgan auf den Gebäudeteil insbesondere auf einem Dach gehoben und auf die Auflagefläche an die vorgegebene Position gelegt werden, und die elektrischen Verbindungen der Solarpanels mit mindestens einem elektrischen Netz im oder am Gebäude hergestellt werden.

Mit diesem erfindungsgemässen Verfahren können die Halte- und Stützsysteme am separaten Montageplatz sehr rationell und sogar automatisiert auch mit Unterstützung von Robotern oder Manipulatoren bei diesem separaten Montageplatz beispielsweise in einem Fabrikgebäude massgeschneidert zugeschnitten und nach Plan zusammengebaut werden. Anschliessend werden sie im montierten Fertigzustand transportiert und auf den Gebäudeteil gehoben und abgelegt und nach Verbindung der elektrischen Kabel der Solarpanels mit dem Netz ist die Montage bereits abgeschlossen, was äusserst effizient und mit entsprechend günstigeren Gesamtkosten für die Installation von solchen Solarverbauungen verbunden ist.

Sehr vorteilhaft werden diese Halte- und Stützsysteme mit jeweils einer Anzahl von mit bestimmten Abmessungen gefertigten Solarpanels als Module versehen, damit die aus diesen jeweiligen Modulen bestehenden Verbauungen zusätzlich kostengünstiger herstellbar sind, weil jeweils eine Vielzahl von gleichen Modulen vorfabriziert werden können, was zu diesen billigeren Herstellungskosten beiträgt.

Wenn ein jeweiliges Halte- und Stützsystem und die auf diesem montierten Solarpanels mit Aussenabmessungen versehen sind, die grösser als die maximalen Abmessungen der Ladefläche des Transportmittels dimensioniert sind, können das Halte- und Stützsystem mit den Panels am separaten Montageplatz zu zwei oder mehreren separaten Teileinheiten montiert werden, die von je einem Transportmittel transportiert und entweder vor oder nach dem Heben auf das Gebäudeteil zu der fertigen Baueinheit miteinander verbunden werden. Die Teileinheiten können aber gegebenenfalls auch auf dem einen Transportmittel aufeinander gestapelt oder nebeneinander aufgestellt werden.

Bei der erfindungsgemässen Solarverbauung besteht das Halte- und Stützsystem für die Solarpanels aus wenigstens einem auf die Auflagefläche des Gebäudeteils legbaren ein- oder mehrteiligen Rahmen, aus verschiedenen Komponenten, wie Sockeln, Profile, Schienen und/oder auf diese befestigte, mit dem Aussenrahmen des Solarpanels verbundene Stützelemente sowie aus Elektrokabeln, wobei diese Komponenten als eine gesamte zusammengebaute Baueinheit im montierten Endzustand auf das Gebäudeteil hebbar und positionierbar sind, und damit die Montage bereits abgeschlossen ist.

Die Erfindung sowie weitere Vorteile derselben sind nachfolgend anhand von Ausführungsbeispielen unter Bezugnahme auf die Zeichnung näher erläutert. Es zeigt:
- Fig. 1: eine teilweise perspektivische Draufsicht einer Solarverbauung, die nach dem erfindungsgemässen Verfahren auf einem Gebäudeteil als angedeutetes Steildach gehoben und montiert ist, die ohne Solarpanels veranschaulicht ist;
- Fig. 2: eine teilweise perspektivische Draufsicht der Solarverbauung nach Fig. 1, die bei der einen Auflagefläche des angedeuteten Steildachs montiert ist, diese ohne Solarpanels;
- Fig. 3: eine teilweise perspektivische Draufsicht der Solarverbauung nach Fig. 1, die ohne die Solarpanels veranschaulicht ist,
- Fig. 4: eine perspektivische Ansicht des gesamten Dachs mit der Solarverbauung nach Fig. 1 mit den Solarpanels;
- Fig. 5: eine perspektivische Seitenansicht einer Variante von Verbindungsgliedern für eine Solarverbauung bei einem Steildach;
- Fig. 6: eine perspektivische Draufsicht einer Solarverbauung, die nach dem erfindungsgemässen Verfahren auf einem Gebäudeteil als Flachdach hebbar und montierbar ist, bei der ein Hebemittel für das Hochheben der Solarverbauung gezeigt ist;
- Fig. 7: eine perspektivische Draufsicht des Halte- und Stützsystems der Solarverbauung nach Fig. 6, die ohne die Solarpanels veranschaulicht ist;
- Fig. 8: eine perspektivische Teilansicht des Halte- und Stützsystems der Solarverbauung nach Fig. 6, die ohne Solarpanel veranschaulicht ist;
- Fig. 9: eine perspektivische Teilansicht eines Eckbereichs der Solarverbauung nach Fig. 6; und
- Fig. 10: eine perspektivische Teilansicht der Solarverbauung nach Fig. 6 mit Stützelementen für die Solarpanels.

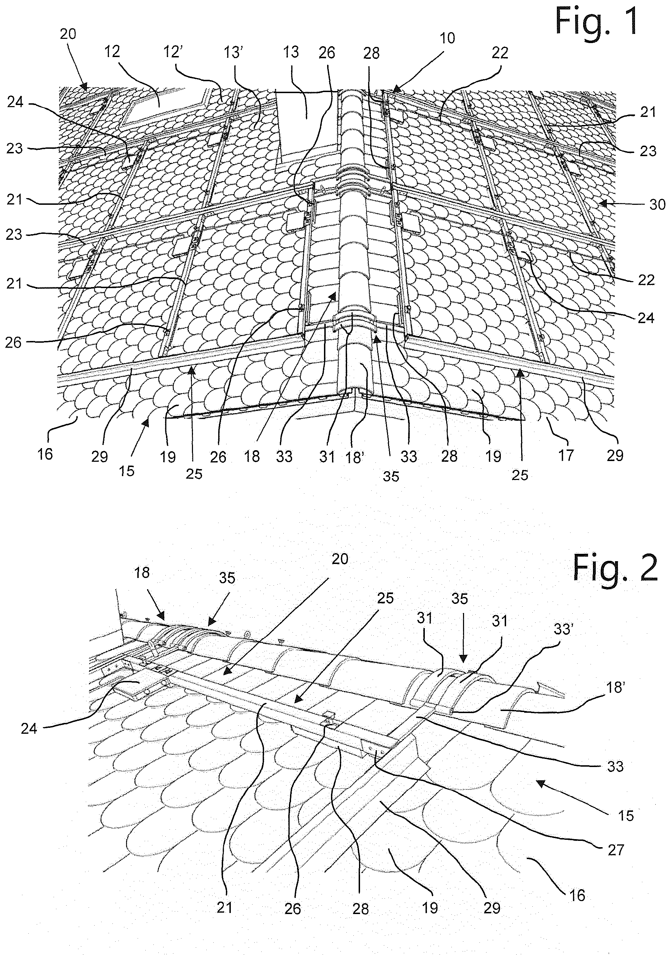

Fig. 1 bis Fig. 4 zeigen eine Solarverbauung 10 mit Solarpanels 11 im zusammengebauten Zustand und auf einem Gebäudeteil installiert. Als Gebäudeteil eignet sich vorzugsweise ein Dach 15, welches vorliegend schematisch dargestellt ist und als ein Steildach mit zwei schrägen Auflageflächen 16, 17 versehen ist.

Bei dem Gebäudeteil kann es sich insbesondere auch um ein Flachdach, um eine Terrasse, einen Anbau, eine vertikale oder schräge Hausfassade oder dergleichen handeln.

Bei dem Steildach 15 sind über- und nebeneinander gereihte Ziegelelemente 19 und ein aus aneinandergereihten abgerundeten Ziegelelementen 18' bestehender oberer First 18 vorgesehen. Des Weiteren sind vom Dach 15 noch dieses tragende Balken 15' veranschaulicht. Die Auflageflächen 16, 17 der Dachschrägen des Dachs 15 verlaufen jeweils mit einem gleichen Winkel in Bezug auf die Horizontale. Sie könnten aber mit unterschiedlichen Winkeln angeordnet sein. Es könnten auch drei oder eine Vielzahl von Auflageflächen vorgesehen sein, bei denen die mittlere zum Beispiel horizontal verlaufen würde. Anstelle von Ziegelelementen könnten auch Dachplatten und/oder dergleichen vorgesehen sein.

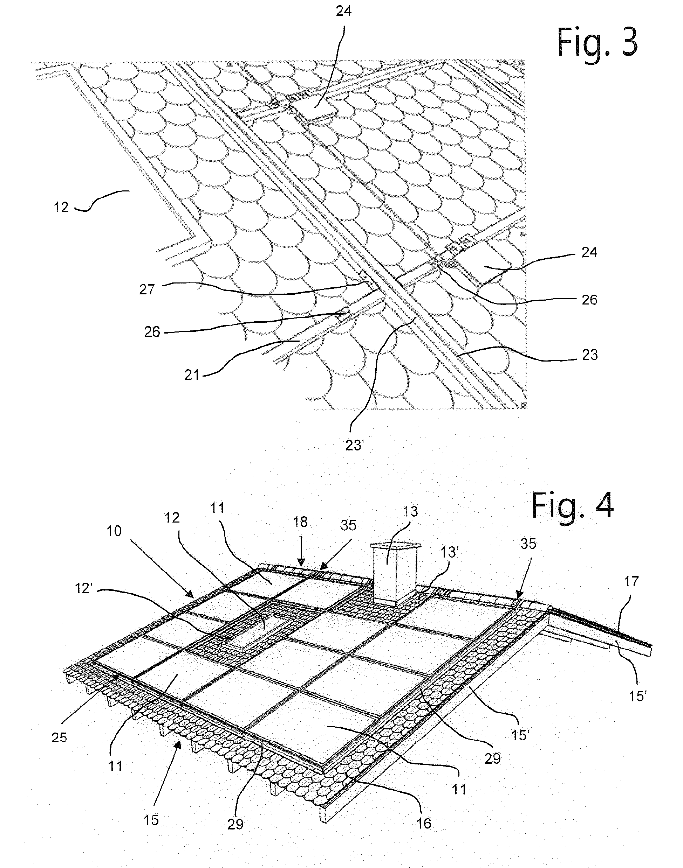

Gemäss Fig. 4 sind bei der Auflagefläche 16 des Dachs 15 jeweils vier Solarpanels 11 nebeneinander und diese in vier Reihen nach oben angeordnet, wobei zwei unbesetzte Aussparungen 12', 13' von der Grösse von zwei bzw. einem Solarpanel für ein Dachfenster 12 bzw. ein Kamin 13 vorhanden sind. Selbstverständlich können mehrere von diesen oder andere Hindernisse installiert sein. Mehrheitlich werden solche Solarverbauungen 10 auf bestehende Gebäudeteile montiert, bei denen die Dachform und ihre Hindernisse vorgegeben sind.

Die Anzahl der Solarpanels 11 und die diese tragende Halte- und Stützsysteme 20, 30 werden bei der Planung der Verbauung 10 berechnet bzw. ausgelegt, was mit Vorteil mittels eines Softwareprogramms erfolgen kann. Dabei werden verschiedene Parameter berücksichtigt, wie der zu generierende Soll-Strombedarf und damit die Anzahl der Solarpanels 11, die dabei entstehenden Investitions- und Amortisationskosten, sowie Subventionsabzüge und weiteres.

Die Fabrikationsgrössen der Solarpanels 11 sind üblicherweise bezüglich ihrer Dimensionen der Länge, Breite und Höhe vorgegeben und basieren physikalisch auf Photovoltaik, die insbesondere bei Sonneneinstrahlung einen Gleichstrom erzeugen, der zu Invertern 24 vorzugsweise in den Halte- und Stützsystemen 20, 30 geleitet wird, wobei vorzugsweise jedem Solarpanel 11 ein solcher Inverter 24 zugeordnet ist. Diese Inverter 24 sind vorteilhaft durch Elektrokabel 22 in Serie- und/oder Parallelschaltung miteinander verbunden und an wenigstens ein elektrisches Netz im oder am Gebäude anschliessbar. Bei diesen Invertern 24 erfolgt ein Umrichten des Gleichstroms in Wechselstrom, der mit einer Frequenz des Netzes versehen wird. Dieser erzeugte Wechselstrom kann dann primär für Energieverbraucher, wie Lichter, Elektrogeräte, Heizungen etc. im Gebäude genutzt und/oder aber auch ins öffentliche Stromnetz eingespiesen werden.

Die Halte- und Stützsysteme 20, 30 für die Solarpanels weisen ein auf die jeweilige Auflagefläche 16, 17 des Gebäudeteils legbaren mehrteiligen Aussenrahmen 25 und von diesem innenseitig gehaltene längliche Schienenelemente 21 und quere Schienenelemente 23 auf. Diese länglichen und queren Schienenelemente 21, 23 sind dabei derart beabstandet zueinander angeordnet, dass sie für jedes Solarpanel 11 einen rundum verlaufenden Rahmen bilden. Die Inverter 24 sind dabei vorteilhaft jeweils innerhalb eines solchen Rahmens an einem jeweiligen Schienenelement 21 befestigt, wobei sie jeweils an der gleichen Position im Rahmen angeordnet sind. Die Elektrokabel 22 sind parallel zu den queren Schienenelementen 23 von einem Inverter zum nächsten geführt. Sie könnten aber selbstverständlich auch anders platziert werden.

Die länglichen sich in Horizontalrichtung bzw. parallel zum First 18 erstreckenden Schienenelemente 21 sind unterseitig mit einem oder mehreren Sockelelementen 28 bestückt, damit diese länglichen und auch die queren Schienenelemente 21, 23 beabstandet von der Auflagefläche 16 angeordnet sind. Sie sind dabei durch Befestigungswinkel 27 rechtwinklig am jeweiligen Schienenelement 23 befestigt, derart, dass letzteres zur Oberseite des Schienenelementes 21 vorzugsweise mit einer solchen Höhe vorsteht, dass die Solarpanels mit ihrer oberen Ebene bündig zur Oberseite des Schienenelementes 23 verlaufen.

Auf der Oberseite sind die länglichen Schienenelemente 21 mit vorzugsweise zwei vorstehenden Halteelementen 26 versehen, welche durch eine Klemmbetätigung jeweils ein Solarpanel 11 aussenseitig umklammern, während die Schienenelemente 23, die sich quer zum First 18 nach oben erstrecken, jeweils einen seitlichen Anschlag 23', der in Fig. 3 ersichtlich ist, für den einen oder die mehreren Solarpanels 11 bilden.

Ferner sind beim Aussenrahmen 25 an seinem Umfang durchgehende Dichtleisten 29 angeordnet, die vorzugsweise mit vorstehenden, dicht auf der Auflagefläche 16, 17 aufliegenden Dichtlippen 29' ausgebildet sind, die einen Schutz bei starkem Windaufkommen und gegen Witterungseinflüsse bieten. Die Halte- und Stützsysteme 20, 30 könnten aber auch ohne diese Dichtlippen montiert sein, indem sie durch diese Sockelelemente 28 unterhalb der Schienenelemente 21 annähernd parallel mit einem geringen Abstand zu der Auflagefläche 16, 17 positioniert wären. Diese Anordnung würde ermöglichen, dass Wind dazwischen durchgeblasen können und damit Kräfte auf die Solarpanels verhindert werden, welche sie abheben würden.

Die beiden Halte- und Stützsysteme 20, 30 sind durch mehrere nebeneinander angeordnete Verbindungsglieder 35 zusammengehalten, die auf dem First 18 des Dachs 15 platziert sind. Es sind vorzugsweise bei beidseitig je einem Solarpanel 11 zwei von diesen nebeneinander angeordneten Verbindungsgliedern 35 installiert, die jeweils aus halbrund- oder ähnlich geformten Bogenelementen 31 und vorzugsweise an den Schienenelementen 21 des jeweiligen Aussenrahmens 25 der Halte- und Stützsysteme 20, 30 befestigten Distanzleisten 33 zusammengesetzt sind. Die Distanzleisten 33 sind dabei durch Scharniere 33' an den Bogenelementen 31 angelenkt, damit die beiden Halte- und Stützsysteme 20, 30 zueinander ebenso gelenkig gehalten sind, so dass sie beim Montieren und im aufgelegten Zustand im Winkel zueinander flexibel gehalten werden können. Es sind pro Verbindungsglied 35 jeweils zwei beabstandet nebeneinander angeordnete Bogenelemente 31 und zwischen diesen die an ihnen angelenkten Distanzleisten 33 vorgesehen. Die Bogenelemente 31 sind den Rundungen der Ziegelelemente 18' angeglichen und sie sind beispielsweise aus Kupfer hergestellt.

Mit dem erfindungsgemässen Verfahren werden die mehreren Solarpanels 11 und die sie tragenden Halte- und Stützsysteme 20, 30 an einem separaten Montageplatz zusammengebaut, so wie sie im geplanten montierten Endzustand auf dem Gebäudeteil verbaut werden, wie dies in Fig. 4 dargestellt ist. Anschliessend werden sie transportiert, durch ein Hebeorgan im montierten Endzustand auf das Dach 15 als Gebäudeteil gehoben und auf die Auflageflächen 16, 17 in die vorgegebene Position gelegt und nach dem Ablegen werden die verbundenen Elektrokabel 22 der Solarpanels 11 mit wenigstens einem elektrischen Netz im oder am Gebäude verbunden.

Sehr vorteilhaft werden dabei die beiden Halte- und Stützsysteme 20, 30 der Solarverbauung 10, die durch die Verbindungsglieder 35 aneinander gelenkig gehalten sind, miteinander auf das Dach 15 gehoben und wie in Fig. 4 dargestellt ist, auf die beidseitigen Auflageflächen 16, 17 in der zusammengebauten Position abgestellt.

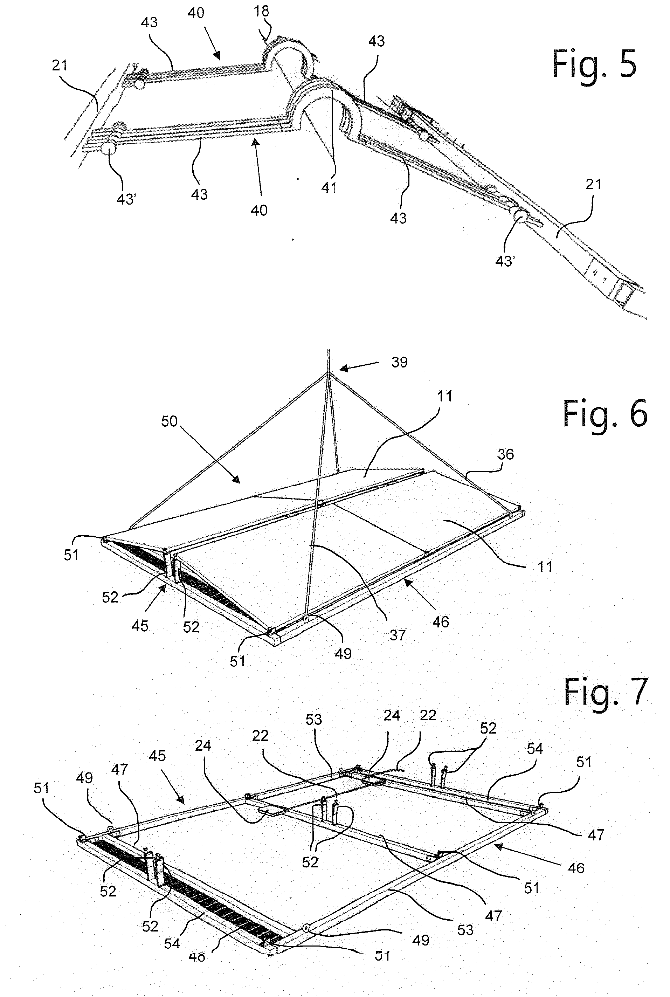

Die beiden zusammengehaltenen Halte- und Stützsysteme 20, 30 werden dabei annähernd in der Position, wie sie dann abgestellt sind, durch das Hebeorgan, zum Beispiel durch einen Mobilkran, von unten vom Boden hochgehoben, oberhalb des Dachs 15 hinüber bewegt und derart abgesenkt, dass die beiden Halte- und Stützsysteme 20, 30 auf die Auflageflächen 16, 17 und die Verbindungsglieder 35 auf dem First 18 positionsgerecht abgelegt werden, wobei dies je nach Einbausituation von der Sollposition etwas abweichen kann. Am Umfangsbereich der beiden Halte- und Stützsysteme 20, 30 sind sie durch mehrere Hebemittel, wie Haken oder Ösen oder dergleichen, zumindest provisorisch versehen, an welchen Hebemittel vom Hebeorgan angelenkt werden, wie in Fig. 6 bei einer andern Solarverbauung veranschaulicht ist, so dass sie wie in der montierten Position oder zumindest in einer annähernd horizontal verlaufenden Ebene vom Transportmittel auf das Gebäudeteil förderbar sind.

Damit kann diese Solarverbauung 10 äusserst montagefreundlich auf dem Dach 15 installiert werden, weil diese beiden Halte- und Stützsysteme 20, 30 zusammen als eine Baueinheit aufs Dach gehoben werden können und sich diese in der abgelegten Endposition gegenseitig halten und sie damit nicht auf dem Dach 15 durch einzelne Befestigungen der Schienenelemente montiert werden müssen, wie das bei den herkömmlichen Verbauungen ausgeführt werden muss.

Diese beiden Halte- und Stützsysteme 20, 30 können zum Beispiel beim vorliegenden Ausführungsbeispiel mit den dreizehn Solarpanels bei der Auflagefläche 16 und den sechszehn Solarpanels bei der Auflagefläche 17 jeweils separat transportiert werden, wenn die Halte- und Stützsysteme 20, 30 mit den Solarpanels als fertige Baueinheit mit ihren Aussenabmessungen grösser als die Abmessungen der Ladekapazität des Transportmittels dimensioniert wären. Sie würden dann aber vorteilhaft vor dem Hochheben auf das Dach 15 durch die Verbindungsglieder 35 auf dem Boden in den montierten Endzustand gebracht und erst dann hochgehoben und abgestellt werden.

Im Prinzip könnte auch zuerst ein Halte- und Stützsystem 20 vom Hebeorgan auf das Dach 15 gehoben und auf der Auflagefläche 16 positionsgerecht abgestellt und gesichert werden, zum Beispiel indem es am Kamin 13 provisorisch befestigt wird, und dass anschliessend das zweite Halte- und Stützsystem 30 vom Hebeorgan hochgehoben und bei der andern Auflagefläche 17 platziert und auf dem Dach am ersten durch die Verbindungsglieder 35 gelenkig befestigt wird.

Die beiden Halte- und Stützsysteme 20 könnten aufgrund der sie gelenkig zusammenhaltenden Verbindungsglieder 35 im zusammengeklappten Zustand zum Beispiel nebeneinander stehend oder übereinander liegend auf einem Transportmittel befestigt und auf diesem Wege zur Baustelle transportiert werden.

Die Halte- und Stützsysteme 20, 30 mit den Solarpanels 11 könnten am separaten Montageplatz zu zwei oder mehreren Teileinheiten montiert werden, die von je einem Transportmittel transportiert und entweder vor oder nach dem Heben auf das Gebäudeteil zu der fertigen Baueinheit miteinander verbunden werden.

Fig. 5 zeigt eine Variante eines Ausführungsbeispiels von Verbindungsgliedern 40, welche wie diejenigen nach Fig. 1 zwei oder mehrere Halte- und Stützsysteme 20, 30 zusammenhalten. Es sind wiederum vorzugsweise zwei von diesen nebeneinander angeordneten Verbindungsgliedern 40 für ein Solarpanel installiert, die jeweils aus vorzugsweise am Schienenelement 21 des jeweiligen Aussenrahmens der Halte- und Stützsysteme befestigten Distanzleisten 43 und diese verbindende halbrund oder ähnlich geformte Bogenelemente 41 gebildet. Die Distanzleisten 43 sind dabei durch Scharniere 43' geteilt, damit die beiden Halte- und Stützsysteme zueinander ebenso gelenkig gehalten sind. Es sind jeweils mehrere beabstandet nebeneinander angeordnete Distanzleisten 33 und Bogenelemente 31 für ein Verbindungsglied 40 vorgesehen. Die Bogenelemente 31 sind mit Vorteil mit den gleich grossen Rundungen wie die Ziegelelemente 18' ausgebildet. Der First 18 ist aber nur schematisch mit einer Geraden angedeutet.

Diese Verbindungsglieder könnten selbstverständlich auch anders als dargetan ausgebildet sein. Es könnte sich um simple Verbindungsstangen, Seile, Bänder, welche um die Schienenelemente gewickelt sein könnten, oder ähnlichem bestehen.

Dieser auf die Auflageflächen 16, 17 des Dachs 15 legbaren und/oder fixierbare Schienenelemente 21, 23 können aus metallenen Stäben oder Profilen vorzugsweise aus Stahl, Kupfer oder ähnlichem mit jeweils einem hohen spezifischen Gewicht hergestellt sein.

Diese Halte- und Stützsysteme 20, 30 mit den mehreren modulartigen Solarpanels könnten in der aufgelegten Position auf dem Dach 15 als Gebäudeteil mit Lasttrag- und/oder Fixationselementen für ein dauerhaftes Fixieren derselben ausgestattet sein, was nicht näher gezeigt ist. Diese könnten am separaten Montageplatz oder auf dem Dach 15 auf den Schienenelementen 21, 23 der Halte- und Stützsysteme aufgelegt oder angebracht werden. Es könnte sich bei diesen um Gewichtsplatten, Säcke oder anderweitige beschwerende Mittel handeln, um den dauerhaften Halt bzw. Fixierung der Verbauung im montierten Endzustand sicherzustellen.

Fig. 6 bis Fig. 10 zeigen eine Solarverbauung 50, die sich insbesondere für eine Installation auf einem bei einem als Flachdach ausgebildeten Dach mit einer ebenen oder annähernd ebenen horizontal verlaufenden Auflagefläche eignet, was nicht näher veranschaulicht ist. Ansonsten ist diese Solarverbauung 50 ähnlich aufgebaut wie diejenige nach Fig. 1, auf die obige Erläuterung entsprechend verwiesen wird.

Diese Solarverbauung 50 besteht aus einem Halte- und Stützsystem 45 und aus vier von diesem gehaltenen Solarpanels 11, bei denen es sich um dieselben wie bei der Solarverbauung 10 handeln kann. Im Unterschied zu letzterer sind diese Solarpanels 11 von einem Halte- und Stützsystem 45 in einem bestimmten Winkel zu der horizontalen Ebene geneigt gehalten, wobei jeweils zwei Solarpanels 11 paarweise den selben Winkel einnehmen und die vier Solarpanels 11 zusammen im Querschnitt annähernd ein Dreieck bilden.

Diese Solarverbauung 50 ist wenn möglich derart auf dem Flachdach positioniert, dass das eine Paar der Solarpanels 11 gegen Osten und das andere Paar gegen Westen ausgerichtet ist, so dass die direkte Sonneneinstrahlung vor dem Mittag auf das gegen Osten gerichtete Paar, über Mittag auf beide Paare und Nachmittags bis am Abend auf das andere gegen Westen gerichtete Paar erfolgt. Der Vorteil bei einem Flach- gegenüber einem Steildach besteht darin, dass diese Solarpanels in der Regel unabhängig von der Ausrichtung des Gebäudes nach Westen bzw. Osten verbaut werden können. Mit Vorteil werden mehrere solcher Baueinheiten von Solarverbauungen 50 auf dem Flachdach montiert, die mit einer anderen Anzahl von Solarpanels versehen sein können, was wiederum vorgängig bei der Planung berechnet und ausgelegt werden kann.

Das Halte- und Stützsystem 45 für die Solarpanels 11 umfasst wenigstens ein auf die Auflagefläche des Dachs legbaren Aussenrahmen 46, darauf befestigte Stützelemente 51, 52, quer im Aussenrahmen 46 angeordnete Querstreben 47 und wenigstens ein Lasttragelement 48. Zudem sind wiederum Inverter 24 und diese verbindende Elektrokabel 22 gleichermassen eingebaut. Der Aussenrahmen 46 und die Querstreben 47 in ihm sind dabei derart beabstandet zueinander angeordnet, dass sie für jedes Solarpanel 11 eine rundum verlaufende Abstützung bilden.

Der Aussenrahmen 46 besteht aus Längselementen 53, 54 und diesen Querstreben 47, bei welchen es sich um Schienen, Stäbe, Profile oder ähnlichem handeln kann. Mit Vorteil sind sie aus einem Metall, wie Stahl oder Kupfer, hergestellt, damit sie als Gewichtslast wirken und ein Abheben der Solarverbauung 50 zusätzlich verhindern.

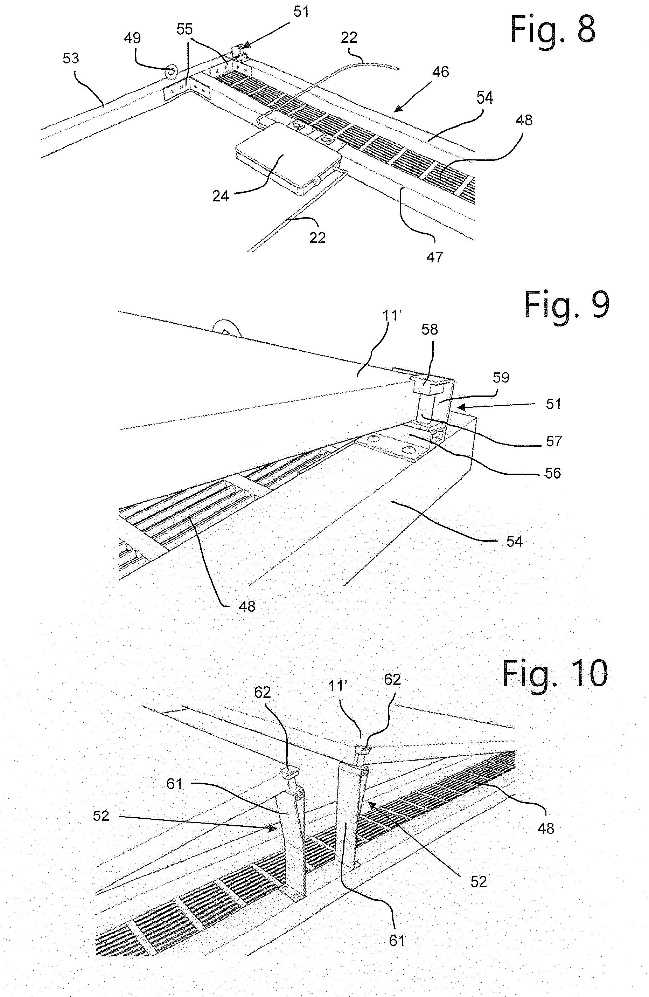

In Fig. 8 ist ein Eckbereich des Aussenrahmens 46 gezeigt, bei dem die Längselemente 53, 54 bzw. die Querstreben 47 durch Eckwinkel 55 aneinander befestigt sind. Sie könnten aber auch aneinander verschweisst oder verschraubt sein. Zwischen den Querstreben 47 und den jeweiligen Längselementen 54 ist jeweils dieses eine Lasttragelement 48 als ein Gitter befestigt. Innenseitig beim Querstreben 47 ist der Inverter 24 mit den Kabelanschlüssen der Elektrokabel 22 angebracht.

Die aussenliegenden kürzeren Stützelemente 51, wie in Fig. 9 eines dargestellt ist, sind so ausgestaltet, dass das jeweilige Solarpanel 11 im Eckbereich 11' sicher gehalten ist. Dieser eine Eckbereich 11' ist jeweils unten bei einem oben auf dem Längselement 54 gehaltenen Auflager 56, hinten bei einem Anschlag 59, und oben bei einem verstellbaren Klemmstück 58 fixierbar.

Fig. 10 zeigt die längeren Stützelemente 52, die ebenso einen jeweiligen Eckbereich 11" eines Solarpanels 11 sicher halten und je aus einem oben auf dem Längselement 54 befestigten Auflager 61 und oberseitig auf diesem bei einem verstellbaren Klemmstück 62 fixierbar ist.

Die Auflager 56, 61 der Stützelemente 51, 52 in den vier Ecken eines Solarpanels sind mit solchen Längen versehen, dass die Solarpanels jeweils einen vorgegebenen Winkel gegenüber der Horizontalen aufweisen und zudem ist mit Vorteil vorgesehen, dass das Solarpanel mit seinen Eckbereichen 11' beabstandet zu dem jeweiligen Längselement 53 positioniert ist, damit ein Winddurchlass zwischen diesen gegeben ist.

Mit dem erfindungsgemässen Verfahren werden die mehreren Solarpanels 11 und das sie tragende Halte- und Stützsystem 45 der Solarverbauung 50 an einem separaten Montageplatz zusammengebaut, wie sie im geplanten montierten Endzustand auf dem Gebäudeteil verbaut werden, wie dies in Fig. 6 dargestellt ist. Anschliessend werden sie transportiert, durch ein Hebeorgan im montierten Endzustand auf das Flachdach als Gebäudeteil gehoben und auf die Auflagefläche in die vorgegebene Position gelegt, und nach dem Ablegen werden die verbundenen Elektrokabel 22 der Solarpanels 11 an wenigstens ein elektrisches Netz im oder am Gebäude hergestellt.

Zweckmässigerweise sind am Umfangsbereich des Halte- und Stützsystems 45 mehrere Haltemittel 49, wie Haken oder Ösen oder dergleichen, zumindest provisorisch verteilt befestigt, an welchen ein Hebemittel 39 mit seinen Längselementen 36, 37 vom Hebeorgan angelenkt werden, wie in Fig. 6 bei der Solarverbauung 50 veranschaulicht ist, so dass sie wie in der montierten Position oder zumindest in einer annähernd horizontal verlaufenden Ebene vom Hebeorgan auf das Gebäudeteil förderbar ist.

Damit kann diese Solarverbauung 50 äusserst montagefreundlich auf dem Flachdach 15 installiert werden, weil diese gesamte Baueinheit aufs Dach gehoben werden kann. Vorzugsweise weist sie eine Steckdose oder einen Stecker der in Serie geschalteten Inventer auf, die oder der dann mit einem entsprechenden Stecker bzw. Steckdose dem Netz steckbar ist.

Die Erfindung ist mit diesen oben erläuterten Ausführungsbeispielen ausreichend dargetan. Sie könnte aber noch durch weitere Varianten erläutert sein.

So könnten diese Halte- und Stützsysteme mit jeweils einer unterschiedlichen Anzahl von Solarpanels als Module mit bestimmten Abmessungen versehen werden, damit jeweils eine Vielzahl von gleichen Modulen vorfabriziert werden können.

Ein jeweiliges Modul bestehend aus dem Halte- und Stützsystem 45 und diese von ihm gehaltenen Solarpanels 11 könnten mit jeweils zwei, vier, sechs oder mehr Solarpanels bestückt sein, wobei diese Solarpanels in einer Schrägposition zur Horizontalen gehalten sind.

Wie erwähnt können die Halte- und Stützsysteme zum Beispiel mit Unterstützung von Robotern oder Manipulatoren bei diesem separaten Montageplatz, wie einem Fabrikgebäude, massgeschneidert zugeschnitten, die Komponenten wie geplant zusammengestellt und montiert werden.

Diese erwähnten zwei oder mehreren Teileinheiten der Solarverbauungen könnten derart korrespondierend zueinander ausgebildet sein, dass sie vor oder nach dem Heben nebeneinandergestellt und mit einem oder mehreren Befestigungsmitteln verbunden werden.

Die Fixierungen der Solarpanels in den Halte- und Stützsystemen können selbstverständlich anders als in den obigen Ausführungsbeispielen erläutert sind ausgestaltet sein. Es können statt Schienenelemente auch nur Abstützelemente oder zueinander beabstandete Schienenstücke oder dergleichen verwendet werden.

Wie oben erwähnt ist, können die Solarpanels mit dem Halte- und Stützsystem im Prinzip auch an einer Gebäudewand oder auf einer Terrasse erfindungsgemäss installiert werden.

## Patentansprüche

1. Verfahren zum Verbauen von Solarpanels bei einem Gebäudeteil insbesondere auf einem Dach (15), bei dem eine Anzahl von Solarpanels (11) auf einer Auflagefläche (16, 17) des Gebäudeteils installiert werden, wobei die Solarpanels (11) durch ein Halte- und Stützsystem (20, 30, 45) in einer vorgegebenen Position auf dieser Auflagefläche (16, 17) gelegt und/oder befestigt werden, wobei die Solarpanels (11) durch einen Transport zum Gebäude geführt und auf den Gebäudeteil gehoben und die elektrischen Verbindungen der Solarpanels (11) mit mindestens einem elektrischen Netz im oder am Gebäude hergestellt werden, **dadurch gekennzeichnet, dass**
die mehreren Solarpanels (11) und das diese tragende Halte- und Stützsystem (20, 30, 45) zumindest an einem separaten Montageplatz vorzugsweise derart zusammengebaut werden, wie sie im geplanten montierten Endzustand auf dem Gebäudeteil verbaut werden, und dass sie anschliessend transportiert, durch ein Hebeorgan auf den Gebäudeteil gehoben und auf die Auflagefläche (16, 17) an die vorgegebene Position gelegt werden, und die elektrischen Verbindungen der Solarpanels (11) mit mindestens einem elektrischen Netz im oder am Gebäude hergestellt werden.

2. Verfahren nach Anspruch 1, **dadurch gekennzeichnet, dass** diese Halte- und Stützsysteme (20, 30, 45) mit jeweils einer Anzahl von Solarpanels (11) eine Baueinheit mit bestimmten Abmessungen bilden, damit eine Vielzahl von gleichen Baueinheiten vorfabriziert werden können.

3. Verfahren nach Anspruch 2, **dadurch gekennzeichnet, dass** eine jeweilige Baueinheit bestehend aus dem Halte- und Stützsystem (20, 30, 45) und diese von ihm gehaltenen Solarpanels (11) mit jeweils zwei, vier, sechs oder mehr Solarpanels (11) bestückt sind, wobei diese Solarpanels (11) in einer Schrägposition zur Horizontalen gehalten sind.

4. Verfahren nach einem der Ansprüche 1 bis 3, **dadurch gekennzeichnet, dass**
die Halte- und Stützsysteme (20, 30, 45) zum Beispiel mit Unterstützung von Robotern oder Manipulatoren bei diesem separaten Montageplatz, wie einem Fabrikgebäude, massgeschneidert zusammengestellt und montiert werden.

5. Verfahren nach einem der Ansprüche 1 bis 4, **dadurch gekennzeichnet, dass**
wenn die zusammenzubauenden Solarpanels (11) und das diese tragende Halte- und Stützsystem (20, 30, 45) als fertige Baueinheit mit Aussenabmessungen grösser als die Abmessungen der Ladefläche des Transportmittels dimensioniert sind, dass dann das jeweilige Halte- und Stützsystem (20, 30, 45) mit den Solarpanels (11) am separaten Montageplatz zu zwei oder mehreren Teileinheiten montiert wird, die von je einem Transportmittel transportiert werden und entweder vor oder nach dem Heben auf das Gebäudeteil zu der fertigen Baueinheit miteinander verbunden werden.

6. Verfahren nach Anspruch 5, **dadurch gekennzeichnet, dass** diese zwei oder mehreren Teileinheiten derart korrespondierend zueinander ausgebildet sind, dass sie vor oder nach dem Heben nebeneinandergestellt und mit einem oder mehreren Befestigungsmitteln verbunden werden.

7. Solarverbauung, die nach dem Verfahren nach einem der Ansprüche 1 bis 6 zusammengebaut und bei einem Gebäudeteil installiert wird, wobei sie eine Anzahl von Solarpanels (11) und zumindest ein diese tragendes Halte- und Stützsystem (20, 30, 45) in einer vorgegebenen Position auf dieser Auflagefläche (16, 17) gelegt und/oder befestigt werden, wobei eine elektrische Verbindung der Solarpanels (11) mit einem elektrischen Netz im oder am Gebäude herstellbar ist, **dadurch gekennzeichnet, dass**
das Halte- und Stützsystem (20, 30, 45) für die Solarpanels (11) wenigstens ein auf die Auflagefläche (16, 17) des Gebäudeteils legbaren ein- oder mehrteiligen Aussenrahmen (25, 46), Schienenelemente (21, 23, 53, 54) und/oder Stützelemente (51, 52) für die Solarpanels (11) sowie Elektrokabel (22) aufweist, wobei dieses wenigstens eine Halte- und Stützsystem (20, 30, 45) als eine gesamte zusammengebaute Baueinheit im montierten Endzustand auf den Gebäudeteil hebbar und positionierbar ist.

8. Solarverbauung nach Anspruch 7, **dadurch gekennzeichnet, dass** bei einem als Flachdach vorgesehenen Dach mit einer ebenen oder annähernd ebenen horizontal verlaufenden Auflagefläche das Halte- und Stützsystem (45) für die Solarpanels (11) aus wenigstens einem auf die Auflagefläche des Dachs legbaren Aussenrahmen (46), und/oder die Schienenelemente (53, 54) und die darauf durch verbindende Stützelemente (51, 52) vorzugsweise in jeweils einem Winkel zur Horizontalen ausgerichteten Solarpanels (11) angeordnet sind.

9. Solarverbauung nach Anspruch 7, **dadurch gekennzeichnet, dass** bei einem als Steildach (15) vorgesehenen Dach (15) mit wenigstens einer in einem Winkel zur Horizontalen ausgerichteten Auflagefläche (16, 17) das Halte- und Stützsystem (20, 30) für die Solarpanels (11) aus wenigstens einem auf die Auflagefläche (16, 17) des Dachs (15) legbaren Aussenrahmen (25) und/oder Schienenelemente (21, 23) mit den von diesen reihenweise gehaltenen Solarpanels (11) angeordnet sind.

10. Solarverbauung nach Anspruch 7, **dadurch gekennzeichnet, dass** bei einem vorzugsweise als Steildach (3) vorgesehenen Dach (15) mit wenigstens zwei in einem Winkel zueinander ausgerichteten Auflageflächen (16, 17) die Halte- und Stützsysteme (20, 30) für die Solarpanels (11) aus wenigstens je einem auf jeweils eine Auflagefläche (16, 17) des Dachs (15) legbaren Aussenrahmen (25) und/oder Schienenelemente (21, 23) mit den von diesen gehaltenen Solarpanels (11) angeordnet sind, wobei die benachbarten Halte- und Stützsysteme (20, 30) durch Verbindungsglieder (35, 40) aneinander befestigt sind und sich gegenseitig halten, wobei diese Verbindungsglieder (35, 40) quer über einen First (18) oder dergleichen dieser im Winkel zueinander ausgerichteten Auflageflächen (16, 17) geführt sind.

11. Solarverbauung nach Anspruch 10, **dadurch gekennzeichnet, dass** diese Verbindungsglieder (35, 40) jeweils aus vorzugsweise nebeneinander angeordneten, am jeweiligen Aussenrahmen (25) und/oder am Schienenelement (21) befestigte Distanzelemente (33, 43) und beim First (18) oder dergleichen diese verbindende bogen- oder ähnlich geformte Bogenelemente (31, 41) gebildet sind, wobei die Distanzelemente (33, 43) durch ein jeweiliges Scharnier (33', 43`) schwenkbar gelagert sind.

12. Solarverbauung nach einem der Ansprüche 7 bis 11, **dadurch gekennzeichnet, dass**
dieser auf die Auflagefläche (16, 17) des Gebäudeteils legbare Aussenrahmen (25, 46), und/oder Schienenelemente (21, 23, 53, 54) aus metallenen Stäben oder Profilen vorzugsweise aus Stahl, Kupfer oder ähnlichem mit jeweils einem hohen spezifischen Gewicht hergestellt sind.

13. Solarverbauung nach einem der Ansprüche 7 bis 12, **dadurch gekennzeichnet, dass**
das Halte- und Stützsystem (20, 30, 45) mit den mehreren Solarpanels (11) in der aufgelegten Position auf dem Gebäudeteil mit Lasttrag- und/oder Fixationselementen (48) für ein dauerhaftes Fixieren derselben ausgestattet ist.

14. Solarverbauung nach Anspruch 13, **dadurch gekennzeichnet, dass** die Lasttrag- und/oder die Fixationselemente (48) am separaten Montageplatz oder auf dem Gebäudeteil am Halte- und Stützsystem (20, 30, 45) aufgelegt oder angebracht werden.

15. Solarverbauung nach einem der Ansprüche 7 bis 14, **dadurch gekennzeichnet, dass**
das Halte- und Stützsystem (20, 30, 45) mit wenigstens einer Aussparung (12', 13') versehen ist, bei der kein Solarpanel (11) und je nach Grösse der Aussparung (12', 13') kein Schienenelement (21, 23) vorhanden sind.

16. Solarverbauung nach einem der Ansprüche 7 bis 15, **dadurch gekennzeichnet, dass**
dieses Halte- und Stützsystem (20, 30, 45) als gesamte zusammengebaute Baueinheit an seinem Umfangsbereich mit mehreren Hebemitteln (49), wie Haken oder Ösen oder dergleichen, zumindest provisorisch versehen ist, durch welche die Solarverbauung (10, 50) vom Hebeorgan mit Hebemitteln in der Ausrichtung, wie in der montierten Position oder zumindest in einer horizontal verlaufenden Ebene vom Transportmittel auf das Gebäudeteil förderbar ist.

17. Solarverbauung nach einem der Ansprüche 7 bis 16, **dadurch gekennzeichnet, dass**
dieses Halte- und Stützsystem (20, 30, 45) mit den plattenförmigen Solarpanels mit Sockelelementen (28) unterlegt ist, damit es beabstandet von der Auflagefläche (16, 17) fixierbar ist, damit zwischen den Solarpanels (11) und der Auflagefläche (16, 17) ein Hohlraum für einen Winddurchlass entsteht.

18. Solarverbauung nach einem der Ansprüche 7 bis 17, **dadurch gekennzeichnet, dass**
die Solarpanels (11) auf Photovoltaik basieren und dabei bei Licht bzw. Sonneneinstrahlung Gleichstrom erzeugen, welcher durch Inverter (24), die vorzugsweise im Halte- und Stützsystem (20, 30, 45) angeordnet sind, in Wechselstrom vorzugsweise zur Einspeisung in ein elektrisches Netz im oder am Gebäude und/oder in das öffentliche Stromversorgungsnetz umgerichtet wird.
